# EUROPÄISCHE PATENTSCHRIFT

(11) **EP 0 988 929 B1**
(45) Veröffentlichungstag und Bekanntmachung des Hinweises auf die Patenterteilung: **12.12.2001**
(21) Anmeldenummer: 99117270.1
(22) Anmeldetag: 14.08.1997
(51) Int. Cl.: B24B 9/14, B24B 55/04

(54) **Brillenglasrandschleifmaschine**
Polishing machine for spectacle lenses
Polisseuse pour bordure de verre de lunettes

(30) Priorität: 04.09.1996 DE 19635807
(43) Veröffentlichungstag der Anmeldung: 29.03.2000
(62) Teilanmeldung aus: 97938909.5
(73) Patentinhaber: Wernicke & Co. GmbH, 40231 Düsseldorf (DE)
(72) Erfinder: Gottschald, Lutz Dr., 40670 Meerbusch (DE)
(74) Vertreter: Rehders, Jochen

(56) Entgegenhaltungen:
- DE-A- 3 608 957
- DE-A- 4 309 101
- DE-C- 945 979
- FR-A- 2 553 323
- GB-A- 2 183 184
- US-A- 2 747 339
- US-A- 3 894 361

## Beschreibung

Die Erfindung betrifft eine Brillenglasrandschleifmaschine mit einer angetriebenen Schleifscheibe, einer relativ zur Schleifscheibe in zwei im wesentlichen zueinander senkrechten Achsen beweglichen, angetriebenen Brillenglashaltewelle und einer die Schleifscheibe und die Brillenglashaltewelle umschließenden Schleifkammer.

Brillenglasrandschleifmaschinen dieser Art sind z. B. aus den Patentschriften DE-A-36 08 957 und DE-A-43 09 101 derselben Anmelderin bekannt. Die DE-A-4 309 101 Offenbart eine Vorrichtung mit: einem Maschinenunterteil, wo ein Schleifscheibenpaket mit ihrem Antrieb angeordnet ist; einem Maschinenoberteil, das auf - und ab - und drehbeweglich ist mittels einer Mechanik, die eine Führungssäule enthält und wo eine Brillenglashaltewelle mit ihrem Antrieb angeordnet ist. Diese Schrift ist als der nächstliegende Stand der Technik angesehen.

Die in der deutschen Patentschrift 36 08 957 beschriebene Brillenglasrandschleifmaschine ist von der Art, bei der eine Schleifkammer auf einem Maschinenuntergestell befestigt ist, eine Brillenglashaltewelle mit ihrem Antrieb durch die Schleifkammer geführt ist, in der auch eine Schleifscheibe angeordnet ist, die mit ihrer Schleifscheibe abgedichtet aus der Schleifkammer herausgeführt ist, außerhalb der Schleifkammer zusammen mit ihrem Antrieb auf einem Kreuzschlitten angeordnet ist und sich auf diese Weise radial sowie parallelachsig zu einem an der Brillenglashaltewelle angeordneten Brillenglasrohling bewegen läßt.

Bei dieser Brillenglasrandschleifmaschine ist ein durch die Anordnung bedingter, erhöhter Platzbedarf zu verzeichnen und sind die Kreuzschlittenführungen hochgenaue Bauelemente, die verhältnismäßig kostspielig in der Herstellung und empfindlich gegen Verschmutzung sind. Dies gilt auch für eine in der FR-Patentanmeldung 2 553 323 beschriebene Brillenglasrandschleifmaschine, bei der nur die Schleifscheibe und ihr Antriebsmotor auf einer Schlittenführung angeordnet sind, während ein eine Brillenglashaltwelle tragender Arm, der auch eine den an der Brillenglashaltewelle angeordneten Brillenglasrohling und die Schleifscheibe umfassende Schleifkammer trägt, nur um eine waagerechte Achse schwenkbar ist.

Demgegenüber ist die Brillenglasrandschleifmaschine gemäß der deutschen Patentschrift 43 09 101 weniger aufwendig in der Herstellung, da hier die Schleifscheibe mit ihrem Antrieb fest in einem Maschinenunterteil angeordnet ist und demgegenüber die Brillenglashaltewelle an einem senkrecht auf- und abbeweglichen sowie um eine senkrechte Achse schwenkbaren Maschinenoberteil angeordnet ist. Die Säulenführung läßt sich hochgenau und stabil mit einfachen Mitteln gestalten, jedoch besteht bei dieser bekannten Brillenglasrandschleifmaschine, trotz der vorgesehenen Abdeckungen für die Schleifscheibe und den von der Brillenglashaltewelle gehaltenen Brillenglasrohling die Gefahr der Verschmutzung von empfindlichen Maschinenteilen durch die in den Bereich zwischen der Schleifscheibe und dem Brillenglasrohling gesprühte Kühlflüssigkeit, die mit dem Abrieb vom Brillenglas von der Schleifscheibe abgeschleudert wird, da sich zwischen dem Maschinenunterteil, mit einer Mulde, in der die Schleifscheibe angeordnet ist und dem Maschinenoberteil mit der Brillenglashaltewelle ein unvermeidlicher Spalt befindet, durch den die Kühlflüssigkeit in den Bereich der Führungen für das Maschinenoberteil gelangen kann.

Aus der GB 2 183 184 A ergibt sich eine Brillenglasrandschleifmaschine mit CNC-Steuerung mit einer an einem Maschinenunterteil angeordneten Führungssäule, an der ein Führungskörper auf- und abbeweglich, aber um die Achse der Führungssäule nicht schwenkbar gelagert ist. An diesem Führungskörper ist wiederum ein Schwenkarm um eine Achse auf- und abschwenkbar sowie in Richtung der Achse axial verschiebbar in Kugelführungen gelagert. Die Steuerung der Auf- und Abbewegung des Führungskörpers erfolgt durch einen Antrieb mit einer Gewindebuchse und einer Gewindespindel und einem daran befestigten Zapfen, auf dem der Führungskörper in einer durch die CNC-Steuerung bestimmten Höhenlage ruht.

Beim Schleifen eines Brillenglases wird der Schwenkarm mit dem eingesetzten Brillenglasrohling auf die Schleifscheibenanordnung aufgesetzt und schwenkt nach oben. Während des Schleifvorgangs schwenkt der Schwenkarm aufgrund seines Eigengewichts abwärts, wobei in den Brillenglasrohling vom Umfang her ein kreisförmiger Anschliff eingeschliffen wird, bis der Schwenkarm seine horizontale Lage erreicht hat, d. h. eine zur Achse parallele Welle auf einem Anschlag am Führungskörper zur Anlage gekommen ist.

Der Erfindung liegt das Problem zugrunde, eine Brillenglasrandschleifmaschine ähnlich der in der deutschen Patentschrift 43 09 101 beschriebenen Art mit einer vorteilhaften Anordnung zum Steuern des Schleifvorgangs zu versehen. Des weiteren sollen Antriebe für die Heb- und Senkbewegung sowie die Schwenkbewegung geschaffen werden, die für eine CNC-Steuerung geeignet sind. Schließlich soll diese Brillenglasrandschleifmaschine bei einfachem Aufbau mindestens den gleichen Schutz vor abspritzender Kühlflüssigkeit bieten wie die Brillenglasrandschleifmaschine gemäß der deutschen Patentschrift 36 08 957.

Zur Lösung dieses Problems wird gemäß Anspruch 1, eine Brillenglasrandschleifmaschine mit einer an einem Maschinenunterteil angeordneten, um eine waagerechte Achse im Bereich des Maschinenunterteils kippbaren Führungssäule, einer in der Führungssäule auf- und abbeweglichen sowie drehbar geführten Tragsäule, einem an der Tragsäule befestigten Maschinenoberteil, einer mit ihrem Antrieb im Maschinenoberteil angeordneten Brillenglashaltewelle, einer auf dem Maschinenunterteil mit ihrem Antrieb angeordneten Schleifscheibenpaket und einem im Bereich des oberen Endes der Führungssäule angeordneten Schaltkontakt, der sich öffnet oder schließt, wenn ein in die Brillenglashaltewelle eingespanntes Brillenglas mit einem vorgegebenen Druck auf der Schleifscheibe aufliegt, vorgeschlagen. Diese Anordnung läßt sich mit besonderen Vorteilen in Verbindung mit einer die Schleifscheibe und die Brillenglashaltewelle umschließenden Schleifkammer und/oder einem CNC-gesteuerten Antrieb zur Höhenverstellung der Tragsäule und einem Antrieb zum Schwenken der Tragsäule um die Achse der Führungssäule verwenden, wobei der Schaltkontakt dazu dient, ein schrittweises Weiterdrehen der Brillenglashaltewelle mit dem zu schleifenden Brillenglas zu bewirken, wenn das Brillenglas mit dem vorgebbaren Druck auf der Schleifscheibe aufliegt und den Schleifvorgang zu beenden,wenn die Brillenglashaltewelle mit dem eingespannten Brillenglas eine vollständige Umdrehung mit diesem vorgebbaren Druck auf der Schleifscheibe vollführt.

Im einzelnen ist es vorteilhaft, wenn ein die waagerechte Schwenkachse bildendes Lager beabstandet zur senkrechten Achse der Führungssäule und parallel zur Schleifscheibenachse an einer Konsole der Führungssäule angeordnet ist, diametral gegenüberliegend eine weitere Konsole an der Führungssäule angeordnet ist, die über eine federnd elastische Abstützung mit dem Maschinenunterteil zusammenwirkt, wobei diese federnd elastische Abstützung durch eine Einstellschraube, die sich über eine Feder am Maschinenunterteil abstützt und in die Konsole einschraubbar ist, gebildet sein kann. Der am oberen Ende der Führungssäule angeordnete Schaltkontakt kann aus einem radial abstehenden, einstellbaren Schaltstößel und einem damit zusammenwirkenden, dazu radial angeordneten, vorzugsweise als Näherungsschalter ausgebildeten Schalter bestehen.

Sowohl die federnd elastische Abstützung als auch der radial einstellbare Schaltstößel in Verbindung mit einem Nährungsschalter lassen sich so einstellen, daß der Schaltvorgang feinfühlig mit großer Genauigkeit, die in der Größenordnung von 0,01 bis 0,05 mm und einer Auflagekraft von gleich oder weniger als 20 N liegt, ausgelöst wird.

Bei einer Brillenglasrandschleifmaschine mit CNC-Steuerung ist eine mit ihrem Antrieb an einem an der Führungssäule auf- und abbeweglichen und um die Achse der Führungssäule schwenkbaren Maschinenoberteil angeordnete Brillenglashaltewelle oder eine mit ihrem Antrieb von einem an der Führungssäule auf- und abbeweglichen und um die Achse der Führungssäule schwenkbar angeordneten Arm getragene Schleifscheibe, eine in der Führungssäule auf- und abbewegliche sowie drehbar geführte Tragsäule für das Maschinenoberteil oder den Arm, ein koaxial in der Führungssäule angeordneter, an der Tragsäule angreifender Antrieb für die Höhenverstellung der Tragsäule und ein Antrieb zum Schwenken der Tragsäule um die Achse der Führungssäule vorteilhaft.

Zum spiel- und reibungsarmen auf- und abbeweglichen und schwenkbaren Führen der Tragsäule kann eine Kugelbuchse in der Führungssäule angeordnet sein.

Im einzelnen läßt sich die Auf- und Abbewegung der Tragsäule durch eine in der Führungssäule in Radial- und Axialwälzlagern geführte, über eine drehfest aber axial verschiebbar in der Führungssäule angeordneten Gewindebuchse an der Tragsäule angreifende, durch einen Stellmotor in Drehung versetzbare Gewindespindel bewerkstelligen, wobei ein weiteres Axialwälzlager zwischen der Gewindebuchse und der Tragsäule angeordnet sein kann.

Der Antrieb zum Schwenken der Tragsäule kann aus einem im Maschinenoberteil angeordneten, eine Gewindespindel drehend antreibenden Stellmotor sowie einer mit der Gewindespindel zusammenwirkenden Gewindemutter bestehen, wobei die Gewindemutter relativ zur Führungssäule senkrecht verschiebbar durch eine an der Führungssäule angeordnete Führungsstange geführt ist.

Wird als Stellmotor ein Gleichstrommotor verwendet, läßt sich die Stellung der Gewindespindel in der Gewindebuchse durch einen mit der Gewindebuchse und der Führungssäule in Wirkverbindung stehenden Weggeber aufnehmen, der den Stellmotor entsprechend einer vorgebbaren Brillenglasform über die CNC-Steuerung ansteuert.

Im einzelnen kann der Weggeber so gestaltet sein, daß die Gewindebuchse gegen Verdrehen durch einen radialen, in einem axialen Schlitz geführten Stift gesichert ist, der als Träger für einen Encoder dient und eine an der Führungssäule angeordnete Zahnstange mit einem Zahnrad am Encoder zur Aufnahme des Weges der Gewindebuchse zusammenwirkt.

Diese Brillenglasrandschleifmaschine mit einer mit ihrem Antrieb auf einem eine Führungssäule tragende Maschinenunterteil angeordneten Schleifscheibe, einer mit ihrem Antrieb an einem Maschinenoberteil angeordneten und damit geradlinig auf- und ab- sowie um eine zur Schleifscheiben- und Brillenglashaltewellenachse beabstandeten und dazu senkrechten Achse der Führungssäule schwenkbaren Brillenglashaltewelle kann vorteilhafterweise eine die Schleifscheibe und die Brillenglashaltewelle umschließende, gegen von der Schleifscheibe abspritzende Kühlflüssigkeit abgedichtete, am Maschinenoberteil angeordnete Schleifkammer mit einem zum Maschinenunterteil geführten Kühlflüssigkeitsabfluß und einer beweglichen Dichtung zwischen der Schleifkammer und einer Schleifspindel aufweisen.

Da diese Schleifkammer sowohl die Brillenglashaltewelle als auch die Schleifscheibe abgedichtet umschließt, kann die von der Schleifscheibe abspritzende Kühlflüssigkeit nicht in den Bereich von Antrieben und Führungen gelangen, wobei jedoch die Brillenglashaltewelle über einen Klappdeckel an der Schleifkammer von außen gut zugänglich ist und sich der Schleifvorgang durch den Klappdeckel, wenn er durchsichtig ausgebildet ist, gut beobachten läßt.

Bei dieser Ausführungsform dient somit die Führungssäule sowohl als Linearführung für die Auf- und Abbewegung des Maschinenoberteils als auch als Schwenkführung um die Achse der Führungssäule. Durch die Anordnung der Schleifkammer am Maschinenoberteil, die die Brillenglashaltwelle und die Schleifscheibe eng umschließt, wird die von der Schleifscheibe abspritzende Kühlflüssigkeit mit Sicherheit von der Säulenführung und vom Schleifscheibenantrieb ferngehalten.

Bei einer anderen Ausführungsform können die Schleifkammer und die Brillenglashaltewelle mit ihrem Antrieb oberhalb der Schleifscheibe mit ihrem Antrieb an einem Maschinenunterteil abgestützt angeordnet sein, während die Schleifscheibe mit ihrem Antrieb an einem an einer senkrechten Führungssäule auf- und abbeweglichen und um die Achse der Führungssäule schwenkbaren Arm angeordnet ist, wobei ihre Schleifspindel abgedichtet in die Schleifkammer geführt ist.

Auch bei dieser Ausführungsform ist somit die Schleifkammer am Maschinenoberteil befestigt und umschließt die Brillenglashaltewelle und die Schleifscheibe. Die Schleifscheibe vollführt hierbei die Relativbewegungen zur Brillenglashaltewelle und zu dem darin eingespannten Brillenglasrohling, ohne daß sich an den Abdichtungen und der Wirksamkeit der Abdichtungen gegenüber Antrieben und Führungen etwas ändert.

Die Abdichtung zwischen der Schleifspindel und der Schleifkammer kann bei beiden Ausführungsformen aus einem einfachen Faltenbalg bestehen, der genügend Beweglichkeit für die Relativbewegungen zwischen der Schleifkammer und der Schleifspindel zuläßt.

Um den beim Schleifen entstehenden Abrieb aus der Schleifkammer abführen zu können, kann auf den Bereich zwischen dem Brillenglasrohling und der Schleifscheibenoberfläche ein Kühlflüssigkeitsstrahl gerichtet sein, der beispielsweise aus Frischwasser oder aus im Umlauf gefiltertem Kühlwasser bestehen kann. In beiden Fällen ist es vorteilhaft, im unteren Bereich der Schleifkammer einen zum Maschinenunterteil geführten Kühlflüssigkeitsablauf vorzusehen, der in eine trichterartig geformte Auffangwanne am Maschinenunterteil ragt, von wo die aufgefangene Kühlflüssigkeit in einen Auffangbehälter fließt. Gegebenenfalls kann der Flüssigkeitsablauf auch zum Maschinenunterteil hin abgedichtet sein, wobei diese Abdichtung ebenfalls aus einem Faltenbalg bestehen kann. Wird als Kühlflüssigkeit Frischwasser verwendet, gelangt die aus dem Kühlflüssigkeitsabfluß abfließende Kühlflüssigkeit in einen Abscheider für den Schleifabrieb und wird dann in die Kanalisation geleitet. Wird die Kühlflüssigkeit im Umwälzverfahren eingesetzt, wird die Kühlflüssigkeit durch eine Kühlflüssigkeitspumpe nach dem Abscheider aufgenommen und den Düsen wieder zugeführt.

Die Schleifkammer kann im wesentlichen parallelepipedisch mit einer Vorderwand, einer Rückwand, zwei Seitenwänden mit abgedichten Durchführungen für die Brillenglashaltewelle und die Schleifspindel, einer Oberwand mit einem Klappdeckel, einem Boden mit dem Kühlflüssigkeitsablfluß und einem Kühlflüssigkeitszulauf im oberen Bereich der Rückwand zum flächigen, nach Art eines Wasservorhangs Benetzen der Rückwand wenigstens im Bereich der Breite der Schleifscheibe ausgebildet sein, so daß sich beim Schleifen von Kunststoffgläsern keine aus Schleifabrieb bestehenden Klumpen an der Rückwand bilden können, die den Schleifvorgang stören können und schwierig zu entfernen sind.

Zum einfachen Auswechseln von Schleifscheiben kann die Schleifkammer in der Seitenwand, die der Seitenwand mit der Durchführung für die Schleifspindel gegenüberliegt, eine verschließbare Öffnung mit einem den Durchmesser der Schleifscheibe übersteigenden Durchmesser aufweisen.

Bei allen vorgenannten Brillenglasrandschleifmaschinen mit Führungssäule läßt sich auf einfache Weise eine sowohl zum Schleifen von Silikatgläsern als auch zum Schleifen von Kunststoffgläsern geeignete Vorschleifscheibe beiderseits einer Feinschleifscheibe mit einer Facettennut anordnen, wobei die Feinschleifscheibe mit der Facettennut so angeordnet ist, daß die Achse der Brillenglashaltewelle beim Schleifen der Dachfacette eines Brillenglases in einer Mittellage im wesentlichen parallel zur Achse der Schleifscheibe liegt und nur ein geringfügiges Schwenken beim Schleifen der Dachfacette eines Brillenglases entsprechend der Raumkurve des Umfangs des Brillenglases um die senkrechte Achse der Führungssäule erfolgt. Auf diese Weise werden Verzeichnungen im Feinschliff vermieden. Demgegenüber schwenkt das formzuschleifende Brillenglas beim Vorschleifen seitlich auf die Vorschleifscheibe zum Vorschleifen von Silikatgläsern oder auf die andere Seite auf die Vorschleifscheibe zum Vorschleifen von Kunststoffgläsern aus und schwenkt beim Vorschleifen über die Breite der Vorschleifscheibe hin und her, um eine gleichmäßige Abnutzung der Vorschleifscheibe zu erreichen. Geringfügige Verzeichnungen die beim Schleifen unter dieser Schräglage entstehen, werden beim anschließenden Feinschliff auf der mittig angeordneten Feinschleifscheibe ausgeglichen.

Die Erfindung wird nachstehend anhand eines in der Zeichnung dargestellten Ausführungsbeispiels des näheren beschrieben. In der Zeichnung zeigen:
- Fig. I: eine perspektivische Ansicht einer erfindungsgemäßen Brillenglasrandschleifmaschine ohne Abdichtung eines Kühlflüssigkeitsabflusses und

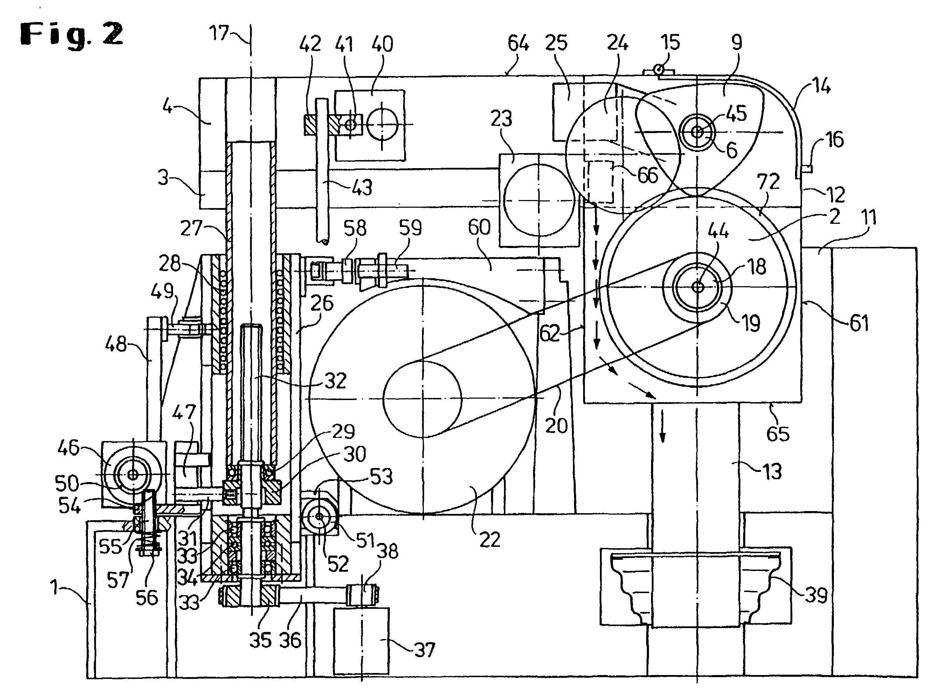

- Fig. 2: eine schematische Schnittansicht einer erfindungsgemäßen Brillenglasrandschleifmaschine mit Abdichtung eines Kühlflüssigkeitsabflusses.

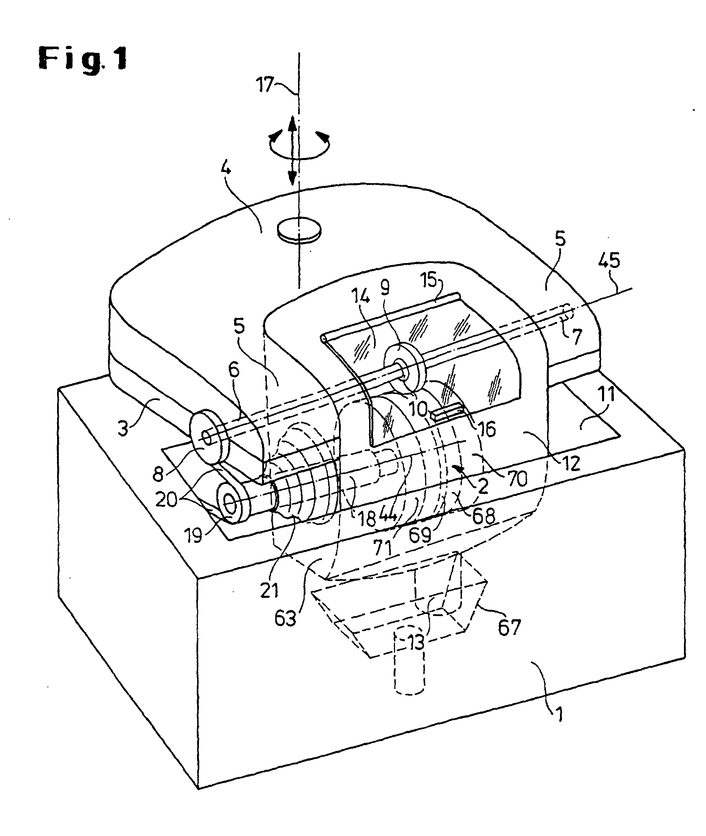

Eine Brillenglasrandschleifmaschine ist schematisch und perspektivisch in Fig. 1 dargestellt, von der ein Maschinenunterteil 1 gezeichnet ist, in dem die gesamte Mechanik und Elektrik zum Durchführen des Schleifvorganges und zum Steuern desselben angeordnet sind. Ein Schleifscheibenpaket 2 aus einer mittigen Feinschleifscheibe 68 mit einer Facettennut 69 und beidseitig angeordneten Vorschleifscheiben 70, 71, wovon die eine zum Vorschleifen von Silikatgläsern und die andere zum Vorschleifen von Kunststoffgläsern bestimmt ist, ist mit seiner Schleifspindel 18 im Maschinenunterteil 1 gelagert und wird von einem Elektromotor 22 über einen Antriebsriemen 20 und eine Riemenscheibe 19 in schnelle Drehung versetzt. Die Facettennut 69 der Feinschleifscheibe 68b liegt fluchtend zu einer Achse 17 einer Führungssäule 26 für ein Maschinenoberteil 3 derart, daß eine Achse 45 einer Brillenglashaltewelle 6, 7 beim Schleifen der Dachfacette eines Brillenglases 9 in einer Mittellage im wesentlichen parallel zu einer Achse 44 des Schleifscheibenpakets 2 liegt. Das Maschinenoberteil 3 ist um die senkrechte Achse 17 schwenkbar und auf- und abbeweglich gelagert Ein Maschinenoberteilgehäuse 4 deckt das Maschinenoberteil 3 und dessen seitlichen Arme 5 ab. In den seitlichen Armen 5 sind eine Halbwelle 6 und eine Halbwelle 7 koaxial gelagert und lassen sich mittels eines in Fig. 2 dargestellten Antriebs 23, 24 in langsame Drehung versetzen. Die Halbwellen 6, 7 dienen zum Einklemmen eines Brillenglasrohlings 9 mittels eines Blocks oder Saugers 10, wodurch der Brillenglasrohling 9 in Bereitschaft gebracht wird, den Umfangsformschliff durchzuführen. Die Halbwellen 6, 7 bilden somit die Brillenglashaltewelle für den Brillenglasrohling 9.

Um einen Brillenglasrohling 9 einzuspannen, wird die eine Halbwelle 6 axial verschoben, z. B. mittels eines Betätigungsknopfes 8. Ebenso ist es möglich, wie in Fig. 2 dargestellt, für die Axialverschiebung der Halbwelle 6 einen steuerbaren Antrieb 25 vorzusehen.

Zwischen den Armen 5 des Maschinenoberteils 3 ist eine Schleifkammer 12 angeordnet, die den Bereich der Halbwellen 6, 7 zwischen den Armen 5 und des Schleifscheibenpakets 2 umschließt Die Schleifkammer ist im wesentlichen parallelepipedisch mit einer Vorderwand 61, eine Rückwand 62, zwei Seitenwänden 63 mit abgedichteten Durchführungen für die Halbwellen 6, 7 und die Schleifspindel 18 einer Oberwand 64 mit einem Klappdeckel 14 und einem Boden 65 gestaltet. Ein am unteren Teil der Schleifkammer 12 angeordneter Kühlflüssigkeitsabfluß 13 ragt in eine trichterartig ausgebildete Auffangwanne 67 im Maschinenunterteil 1 hinein, von wo die Kühlflüssigkeit in einen nicht dargestellten Auffangbehälter zur weiteren Aufbereitung abfließt.

Zwischen der Schleifspindel 18 und einer Seitenwand 63 der Schleifkammer 12, durch die die Schleifspindel 18 hindurchgeführt ist, ist ein Faltenbalg 21 angeordnet, der mit der Seitenwand 63 der Schleifkammer 12 und der Schleifspindel 18 dicht verbunden ist, der Schleifkammer 12 jedoch relativ zur Schleifspindel 18 ausreichend Bewegungsspielraum in Richtung der Schwenkachse 17 und um diese Schwenkachse 17 herum gibt. In der dieser Seitenwand 63 gegenüberliegenden Seitenwand 63 ist zum Auswechseln der Schleifscheiben 68, 70, 71 eine verschließbare Öffnung 72 mit einem den Durchmesser der Schleifscheiben 68, 70, 71 übersteigenden Durchmesser angeordnet.

Die Schleifkammer 12 ist mittels des durchsichtigen Klappdeckels 14 verschlossen, der an der Oberwand 64 der Schleifkammer 12 mittels eines Scharniers 15 angelenkt ist und sich durch Angreifen an eine Handhabe 16 in die geöffnete Stellung hochklappen läßt.

In Fig. 2 sind der am Maschinenunterteil 1 befestigte Antriebsmotor 22 für die Schleifscheibe 2 und der im Maschinenoberteil 3 angeordneter Antriebsmotor 23 ersichtlich, der die Brillenglashaltewelle 6, 7 über Zwischenräder 24 antreibt. Auch der Antrieb 25 für die Axialverstellung der Halbwelle 6 ist am Maschinenoberteil 3 angeordnet.

Eine senkrechte, rohrförmige Führungssäule 26, die am Maschinenunterteil 1 befestigt ist, dient als Führung für eine am Maschinenoberteil 3 befestigte Tragsäule 27, die in der senkrechten Säule 26 mittels einer Kugelbuchse 28 praktisch spielfrei geführt ist.

Das untere Ende der Tragsäule 27 ruht auf einem Axialkugellager 29 und läßt sich somit im wesentlichen reibungsfrei in der Kugelbuchse drehen und axial verschieben.

Die Axialverschiebung der Tragsäule 27 wird durch eine Gewindespindel 32 bewirkt, die in eine Gewindebuchse 30 unterhalb des Axiallagers 29 geschraubt ist. Die Gewindebuchse 30 ist mittels eines in einem axialen Schlitz 47 geführten Stiftes 31 gegen Verdrehen gegenüber der senkrechten Säule 26 gesichert. Die Gewindespindel 32 ist mittels paralleler Radiallager 33 in der senkrechten Säule 26 gelagert, während ein weiteres Axiallager 34 die Last des Maschinenoberteils 3 mit allen daran angeordneten Bauelementen aufnimmt.

Die Gewindespindel 32 wird von einem Höhenverstellantrieb in Form eines Stellmotors 37 über eine Riemenscheibe 38, einen Zahnriemen 36 und eine Riemenscheibe 35 in Drehung versetzt. Der Stellmotor 37 wird von einer nicht dargestellten CNC-Steuerung beaufschlagt und bewegt das Maschinenoberteil 3 und damit die Brillenglashaltwelle 6, 7 mit einem eingespannten Brillenglas 9 entsprechend der zu schleifenden Brillenglaskontur auf und ab.

Wird als Stellmotor 37 ein Gleichstrommotor verwendet, wird die Höhenlage der Gewindebuchse 30 und damit des Brillenglases 9 bezüglich des Schleifscheibenpakets 2 durch einen Weggeber erfaßt, der aus einen am Stift 31 befestigten Encoder 46 und einer an der Führungssäule 26 mittels eines Halters 48 befestigten Zahnstange 48, in die ein Zahnrad 50 am Encoder 46 eingreift, besteht.

Für das gesteuerte Schwenken um die senkrechte Achse 17 ist ein Schwenkantrieb in Form eines Stellmotors 40 im Maschinenoberteil 3 vorgesehen. Dieser Stellmotor 40 treibt eine Gewindespindel 41 an, die auf eine Gewindemutter 42 wirkt. Diese Gewindemutter 42 umgreift eine an der senkrechten Säule 26 befestigte Führungsstange 43, so daß ein Verschieben der Gewindemutter 42 auf der Gewindespindel 41 aufgrund einer Drehung der Gewindespindel 41 ein Schwenken des Maschinenoberteils 3 um die senkrechte Achse 17 bewirkt. Diese senkrechte Achse 17 ist beabstandet zu den waagerechten Drehachse 44, 45 der Schleifscheibe 2 und der Brillenglashaltewelle 6, 7. Die Führungsstange 43 kann auch an der Gewindemutter 42 befestigt und in einer Führung an der Führungssäule 26 verschiebbar sein.

Das Schwenken um die senkrechte Achse 17 bewirkt, daß sich der Brillenglasrohling 9 über die Breite der Schleifscheibe 2 hin- und herbewegen läßt. Diese gleichmäßige Hin- und Herbewegung dient einerseits dazu, eine gleichmäßige Abnutzung der zylindrischen Vorschleifscheiben 70, 71 zu erreichen. Andererseits läßt sich diese gesteuerte Bewegung dazu benutzen, den Brillenglasrohling 9 nach Beendigung des Vorschleifens in die Facettennut 69 der Feinschleifscheibe 68 umzusetzen und eine Dachfacette an das formgeschliffene Brillenglas 9 anzuschleifen.

Dieses Facettenschleifen kann als freies Schleifen erfolgen, wenn das formgeschliffene Brillenglas mit seiner gesamte Breite in die Facettennut eintauchen kann, so daß die Umfangskontur des formgeschliffenen Brillenglases den Verlauf der Dachfacette bestimmt.

Ebenso ist es möglich, beim Schleifen der Dachfacette eine Steuerung der Schwenkbewegung um die Achse 17 mittels des Schwenkantriebs 40, 41, 42, 43 durchzuführen, so daß die Dachfacette auf dem Umfang des vorgeschliffenen Brillenglases einen vorbestimmten Verlauf erhält.

Zum Steuern der Drehbewegung der Brillenglashaltewelle 6, 7 während des Schleifvorganges und zum Feststellen des Endes des Schleifvorganges dient ein Schaltkontakt 58, 59, der sich öffnet oder schließt, wenn der Auflagedruck des in die Brillenglashaltewelle 6, 7 eingespannte Brillenglases 9 auf einer der Schleifscheiben 68, 70, 71 unter einen vorgebbaren Druck von beispielsweise 20 N absinkt

Zu diesem Zweck ist die Führungssäule 26 mittels eines seitlich in einer Konsole 53 am unteren Ende der Führungssäule 26 angeordneten Lagers 51 um eine Achse 52 schwenkbar am Maschinenunterteil 1 gelagert. Die Schwenkachse 52 verläuft parallel zur Drehachse 54 des Schleifscheibenpakets 2 Diametral gegenüber dem Lager 51 ist eine weitere Konsole 54 an der Führungssäule 26 angeordnet, in die sich eine durch eine Bohrung im Maschinenunterteil 1 geführte Schraube 55 mit Sechskantkopf 56 mehr oder weniger weit einschrauben läßt. Zwischen dem Sechskantkopf 56 und dem Maschinenunterteil 1 ist eine Druckfeder 57 angeordnet. Am oberen Ende der Führungssäule 26 ist ein radial zum Schleifscheibenpaket 2 gerichteter, einstellbarer Schaltstößel 58 angeordnet, der mit einem an einem Träger 60 angeordneten Nährungsschalter 59 zusammenwirkt.

Wird ein zu schleifendes Brillenglas 9 auf eine der Schleifscheiben 68, 70, 71 aufgesetzt, kippt das Maschinenoberteil 3 geringfügig um die Kippachse 52, der Schaltstößel 58 entfernt sich vom Nährungsschalter 59 und die Brillenglashaltewelle 6, 7 mit dem eingespannten Brillenglas 9 dreht sich während des Schleifvorganges solange nicht, bis eine durch die Einstellung der Gewindebuchse 30 bestimmte Höhenlage der Brillenglashaltewelle 6, 7 bezüglich der entsprechenden Schleifscheibe erreicht ist. Hierdurch sinkt die Auflagekraft des Brillenglases 9 auf der jeweiligen Schleifscheibe auf den vorgegebenen Wert von beispielsweise 20 N, das Maschinenoberteil kippt um die Kippachse 52 entgegen der einstellbaren Kraft der Feder 57, der Nährungsschalter 49 wird durch die Annäherung des Schaltstößels 58 aktiviert und bewirkt über ein Signal an die CNC-Steuerung ein Weiterdrehen der Brillenglashaltewelle 6, 7 mit dem Brillenglas 9, wodurch erneut ein Kippen des Maschinenoberteils 3 in entgegengesetzter Richtung und eine entsprechendes Desaktivieren des Nährungsschalters 59 erfolgt, bis in dieser Winkelstellung der Brillenglashaltewelle 6, 7 wieder der vorgegebene Wert erreicht ist. Auf diese Weise wird durch schrittweises Drehen der Brillenglashaltewelle 6, 7 der Formschliff des Brillenglases 9 gesteuert. Dieser Formschliff ist beendet, wenn der Nährungskontakt 59 über eine vollständige Umdrehung der Brillenglashaltewelle 45 mit dem eingespannten Brillenglas 9 ununterbrochen aktiviert bleibt, was ein Zeichen für die Beendigung des Schleifvorgangs ist, so daß das Brillenglas 9, wenn beispielsweise der Vorschliff auf diese Weise durchgeführt wurde, in die Facettennut 69 der Feinschleifscheibe 68 umgesetzt und derselbe Vorgang wiederholt wird. Durch Einstellen der Vorspannung der Feder 57 mittels der Einstellschraube 55 und des Abstandes des Schaltstößels 58 vom Nährungsschalter 59 läßt sich das Schleifen von Brillengläsern feinfühlig und hochgenau steuern.

Während des Schleifens wird mittels nicht dargestellter Düsen Kühlflüssigkeit in den Bereich zwischen dem Brillenglasrohling 9 und der Schleifscheibenoberfläche gesprüht, die auch dazu dient, den Schleifabtrieb abzuführen. Ein weiterer Kühlmittelflüssigkeitszulauf 66 ist an der Rückwand 62 der Schleifkammer 12 angeordnet und sorgt für eine fläche Benetzung der Rückwand 62 wenigstens entsprechend der Breite des Schleifscheibenpakets 2 nach Art eines Flüssigkeitsvorhangs. Hierdurch wird der Schleifabrieb beim Schleifen von Kunststoffgläsern abgespült, und es können sich keine schwer zu entfernenden und den Schleifvorgang störenden Klumpen bilden. Da die Schleifkammer 12 allseitig mit Aufnahme des Abflusses 13 geschlossen ist, können keine Kühlflüssigkeit und kein Schleifabrieb während des Schleifvorgangs aus der Schleifkammer 12 heraus in den Bereich der Steuerung und der Antriebe im Maschinenober- und -unterteil 3, 1 gelangen Die Kühlflüssigkeit wird vielmehr über den Abfluß 13, der bei der Ausführungsform gemäß Fig. 2 mittels eines Faltenbalges 39 gegenüber dem Maschinenunterteil 1 abgedichtet sein kann, zu einem nicht dargestellten Abscheider geführt, wo der Schleifabrieb von der Kühlflüssigkeit abgetrennt wird. Wenn den erwähnten Düsen Frischwasser als Kühlwasser zugeführt wird, kann das von Schleifabrieb befreite Kühlwasser unmittelbar in die Kanalisation geleitet werden. Es ist jedoch auch möglich, die Kühlflüssigkeit im Kreislauf zu führen, indem eine Umwälzpumpe vorgesehen wird, die die gereinigte Kühlflüssigkeit nach dem Abscheiden ansaugt und wieder den Düsen zuführt. In diesem Falle bereitet es auch keine Probleme, der Kühlflüssigkeit Zusätze beizugeben, z. B. korrosionsverhindernde und schaumbeseitigende Zusätze.

Statt das Maschinenoberteil 3 mit der Brillenglashaltewelle 6, 7 und allen Antrieben sowie der Schleifkammer 12 heb-, senk- und schwenkbar anzuordnen, ist es auch möglich, das Maschinenoberteil 3 am Maschinenunterteil 1 abzustützen und das Schleifscheibenpaket 2 mit der Schleifspindel 18 und dem Antriebsmotor 22 an einem Arm entlang der senkrechten Achse 17 heb- und senkbar sowie um diese senkrechte Achse 17 schwenkbar anzuordnen. Die Antriebe für die Heb- und Senkbewegung sowie für die Schwenkbewegung können analog zu den entsprechenden Antrieben für das bewegliche Maschinenoberteil 3 gestaltet sein. Die bewegliche Durchführung der Schleifspindel 18 durch eine Seitenwand 63 der Schleifkammer 12 und ihre Abdichtung mittels eines Faltenbalges 21 können ebenfalls analog gestaltet sein. Bei dieser Anordnung ist eine bewegliche Durchführung des Abflusses 13 durch das Maschinenunterteil 1 nicht erforderlich, so daß auch eine einfachere Abdichtung als die mittels des in Fig. 2 dargestellten Faltenbalges 39 möglich ist.

Ggf. kann das Maschinenoberteil 3 mit dem Gehäuse 4 in einer nicht dargestellten Haube angeordnet sein, die auch die CNC-Steuerung für die Brillenglasrandschleifmaschine aufnehmen sowie auf einer Vorderwand einen Bildschirm und eine Tastatur zur Eingabe von Daten und Befehlen aufweisen kann.

Die erfindungsgemäße Brillenglasrandschleifmaschine zeichnet sich durch eine einfache Säulenführung für das Maschinenoberteil oder die Schleifscheibe mit Antrieb aus, wobei sowohl die Säulenführung als auch die Antriebe durch die die Brillenglashaltewelle 6, 7 und die Schleifscheibe 2 umschließende Schleifkammer gegen von der sich drehenden Schleifscheibe 2 abspritzende Kühlflüssigkeit geschützt sind und die Maschine durch Schleifabrieb nicht verschmutzt wird. Die Antriebe zum Höhenverstellen und Schwenken der Tragsäule 27 lassen sich ebenso wie der Schaltkontakt 58, 59 platzsparend und funktional in die Maschine integrieren, wodurch eine große Funktionssicherheit und Genauigkeit bei der Brillenglasrandbearbeitung gewährleistet sind; dennoch ist die erfindungsgemäße Maschine einfach und robust gebaut und läßt sich kostengünstig herstellen.

## Patentansprüche

1. Brillenglasrandschleifmaschine mit
- einer an einem Maschinenunterteil (1) angeordneten, um eine waagerechte Achse (52) im Bereich des Maschinenunterteils (1) kippbaren Führungssäule (26),
- einer in der Führungssäule (26) auf- und abbeweglichen sowie drehbar geführten Tragsäule (27),
- einem an der Tragsäule (27) befestigten Maschinenoberteil (3),
- einer mit ihrem Antrieb (23, 24) im Maschinenoberteil (3) angeordneten Brillenglashaltewelle (6, 7),
- einem auf dem Maschinenunterteil (1) mit ihrem Antrieb (22) angeordneten Schleifscheibenpaket (2) und
- einem im Bereich des oberen Endes der Führungssäule (26) angeordneten Schaltkontakt (58, 59), der sich öffnet oder schließt, wenn ein in die Brillenglashaltewelle (6, 7) eingespanntes Brillenglas (9) mit einem vorgebbaren Druck auf einer der Schleifscheiben (68, 70,71) des Schleifscheibenpakets (2) aufliegt.

2. Brillenglasrandschleifmaschine nach Anspruch 1, **dadurch gekennzeichnet, daß** ein die waagerechte Schwenkachse (52) bildendes Lager (51) beabstandet zur senkrechten Achse (17) der Führungssäule (22) und parallel zur Schleifscheibenachse (44) an einer Konsole (53) am unteren Ende der Führungssäule (22) und diametral gegenüberliegend eine weitere Konsole (54) an der Führungssäule (22) angeordnet ist, die über eine federnd elastische Abstützung (55, 57) mit dem Maschinenunterteil (1) zusammenwirkt.

3. Brillenglasrandschleifmaschine nach Anspruch 2, **dadurch gekennzeichnet, daß** eine Einstellschraube (55), die sich über eine Feder (57) am Maschinenunterteil (1) abstützt, in die Konsole (54) einschraubbar ist.

4. Brillenglasrandschleifmaschine nach einem der Ansprüche 1 bis 3, **dadurch gekennzeichnet, daß** am oberen Ende der Führungssäule ein radial abstehender, einstellbarer Schaltstößel (58) angeordnet ist, der mit einem dazu radial angeordneten, vorzugsweise als Näherungsschalter ausgebildeten Schalter (59) zusammenwirkt.

5. Brillenglasrandschleifmaschine mit CNC-Steuerung nach einem der Ansprüche 1 bis 4, mit
- einer mit ihrem Antrieb (23, 24) an einem an der Führungssäule (26) auf- und abbeweglichen und um die Achse (17) der Führungssäule (26) schwenkbaren Maschinenoberteil (3) angeordneten Brillenglashaltewelle (6, 7) und einer am Maschinenunterteil (1) mit ihrem Antrieb angeordneten Schleifscheibe (2)
- einer in der Führungssäule (26) auf- und abbeweglich sowie drehbar geführten Tragsäule (27) für das Maschinenoberteil (3)
- einem koaxial in der Führungssäule (26) an der Tragsäule (27) angreifenden CNC-gesteuerten Antrieb (30, 31, 32, 35, 36, 37, 38) zur Höhenverstellung der Tragsäule (27)
- einem mit der Tragsäule (27) und der Führungssäule (26) in Wirkverbindung stehenden Weggeber (46, 48, 50) zur Steuerung eines Höhenverstellmotors (37) entsprechend einer vorgebbaren Brillenglasform und
- einem Antrieb (40, 41, 42, 43) zum gleichmäßigen Hin- und Herbewegen eines Brillenglasrohlings (9) auf einer Vorschleifscheibe (70, 71), zum Umsetzen des formgeschliffenen Brillenglases in eine Facettennut (69) einer Feinschleifscheibe (68) und zum Schleifen einer Dachfacette auf dem Umfang des formgeschliffenen Brillenglases entsprechend einem vorbestimmten Verlauf durch gesteuertes Schwenken der Tragsäule (27) und somit der Brillenglashaltewelle (6, 7) um die Achse (17) der Führungssäule (26).

6. Brillenglasrandschleifmaschine mit CNC-Steuerung nach einem der Ansprüche 1 bis 4 mit
- einer mit ihrem Antrieb (22) an einem an der Führungssäule (26) auf- und abbeweglichen und um die Achse (17) der Führungssäule (26) schwenkbaren Arm angeordneten Schleifscheibe (2),
- einer mit ihrem Antrieb (23, 24) an einem feststehenden Maschinenoberteil (3) angeordneten Brillenglashaltewelle (6, 7)
- einer in der Führungssäule (26) auf- und abbeweglich sowie drehbar geführten Tragsäule (27) für den Arm,
- einem koaxial in der Führungssäule (26) an der Tragsäule (27) angreifenden, CNC-gesteuerten Antrieb (30, 31, 32, 35, 36, 37, 38) zur Höhenverstellung der Tragsäule (27),
- einem mit der Tragsäule (27) und der Führungssäule (26) in Wirkverbindung stehenden Weggeber (46, 48, 50) zur Steuerung eines Höhenverstellmotors (37) entsprechend einer vorgebbaren Brillenglasform und
- einem Antrieb (40, 41, 42, 43) zum gleichmäßigen Hin- und Herbewegen einer Vorschleifscheibe (70, 71), zum Umsetzen des formgeschliffenen Brillenglases in eine Facettennut (69) einer Feinschleifscheibe (68) und zum Schleifen einer Dachfacette auf dem Umfang des formgeschliffenen Brillenglases entsprechend einem vorbestimmten Verlauf durch gesteuertes Schwenken der Tragsäule (27) und somit des Schleifscheibe (2) um die Achse (17) der Führungssäule (26).

7. Brillenglasrandschleifmaschine nach Anspruch 5 oder 6, **gekennzeichnet durch** eine Kugelbuchse (28) in der Führungssäule (26) zum spiel- und reibungsarmen auf- und abbeweglichen und schwenkbaren Führen der Tragsäule (27).

8. Brillenglasrandschleifmaschine nach Anspruch 5, 6 oder 7, **gekennzeichnet durch** eine in der Führungssäule (26) in Radial- und Axialwälzlagern (33, 34) geführte, über eine drehfest, aber axial verschiebbar in der Führungssäule (26) angeordnete Gewindebuchse (30) an der Tragsäule (27) angreifende, **durch** einen Stellmotor (37) in Drehung versetzbare Gewindespindel (32).

9. Brillenglasrandschleifmaschine nach Anspruch 8, **gekennzeichnet durch durch** ein Axialwälzlager (29) zwischen der Gewindebuchse (30) und der Tragsäule (27).

10. Brillenglasrandschleifmaschine nach einem der Ansprüche 5 bis 9, **dadurch gekennzeichnet, daß** der Antrieb zum Schwenken der Tragsäule (27) aus einem im Maschinenoberteil (3) angeordneten, eine Gewindespindel (41) drehend antreibenden Stellmotor (40) sowie einer mit der Gewindespindel (41) zusammenwirkenden Gewindemutter (42) besteht und die Gewindemutter (42) relativ zur Führungssäule (26) senkrecht verschiebbar durch eine an der Führungssäule (26) angeordnete Führungsstange (43) geführt ist.

11. Brillenglasrandschleifmaschine nach einem der Ansprüche 5 bis 10, **gekennzeichnet durch** einen mit der Gewindebuchse (30) und der Führungssäule (26) in Wirkverbindung stehenden Weggeber (46, 48, 50) zur Steuerung des Stellmotors (37) entsprechend einer vorgebbaren Brillenglasform.

12. Brillenglasrandschleifmaschine nach Anspruch 11, **dadurch gekennzeichnet, daß** die Gewindebuchse (30) gegen Verdrehen durch einen radialen, in einen axialen Schlitz (47) geführten Stift (31) gesichert ist, der als Träger für einen Encoder (46) dient und eine an der Führungssäule (26) angeordnete Zahnstange (48) mit einem Zahnrad (50) am Encoder (46) zur Aufnahme des Weges der Gewindebuchse (30) zusammenwirkt.

13. Brillenglasrandschleifmaschine nach einem der Ansprüche 1 bis 12 mit
- einer mit ihrem Antrieb (22) auf einem eine Führungssäule (26) tragenden Maschinenunterteil (1) angeordneten Schleifscheibe (2),
- einer mit ihrem Antrieb (3, 24)an einem Maschinenoberteil (3) angeordneten und damit geradlinig auf- und ab- sowie um eine zur Schleifscheiben- und Brillenglashaltewellendrehachse (44, 45) beabstandeten und dazu senkrechten Achse (17) der Führungssäule (26) schwenkbaren Brillenglashaltewelle (6, 7),
- einer die Schleifscheibe (2) und die Brillenglashaltewelle (6, 7) umschließenden, gegen von der Schleifscheibe (2) abspritzende Kühlflüssigkeit abgedichteten, am Maschinenoberteil (3) angeordneten Schleifkammer (12) mit einem zum Maschinenunterteil (1) geführten Kühlflüssigkeitsabfluß (13) und
- einer beweglichen Dichtung (21) zwischen der Schleifkammer (12) und einer Schleifspindel (18).

14. Brillenglasrandschleifmaschine nach einem der Ansprüche 1 bis 12 mit
- einer mit ihrem Antrieb (22) an einem an einer senkrechten Säule (26) auf- und abbeweglichen und um die Achse (17) der Führungssäule (26) schwenkbaren Arm angeordneten Schleifscheibe (2),
- einer mit ihrem Antrieb (23, 24) oberhalb der Schleifscheibe (2) an einem Maschinenoberteil angeordneten, an einem oberen Bereich eines Maschinenunterteils abgestützten Brillenglashaltewelle (6, 7,)
- einer am Maschinenoberteil befestigten, die Schleifscheibe (2) und die Brillenglashaltewelle (6, 7) umschließenden, gegen von der Schleifscheibe (2) abspritzende Kühlflüssigkeit abgedichteten, am die Brillenglashaltewelle (6, 7) abstützenden oberen Bereich des Maschinenunterteils (1) angeordneten Schleifkammer (12) mit einem zum unteren Bereich des Maschinenunterteils geführten Kühlflüssigkeitsabfluß (13) und
- einer beweglichen Dichtung (21) zwischen der Schleifkammer (12) und einer Schleifspindel (18).

15. Brillenglasrandschleifmaschine nach Anspruch 13 oder 14, **dadurch gekennzeichnet, daß** die Abdichtung zwischen der Schleifspindel (18) und der Schleifkammer (12) aus einem Faltenbalg (21) besteht.

16. Brillenglasrandschleifmaschine nach Anspruch 13 oder 14, **gekennzeichnet durch** eine Abdichtung zwischen der Schleifkammer (12) und dem Maschinenunterteil (1) aus einem Faltenbalg (39).

17. Brillenglasrandschleifmaschine nach Anspruch 13, 14 oder 15, **dadurch gekennzeichnet, daß** der rohrförmige Kühlflüssigkeitsabfluß (13) in eine trichterartig geformte Auffangwanne (67) am Maschinenunterteil (1) ragt und die Kühlflüssigkeit von der Auffangwanne (67) in einen Auffangbehälter fließt.

18. Brillenglasrandschleifmaschine nach einem der Ansprüche 13 bis 17, **gekennzeichnet durch** eine im wesentlichen parallelepipedische Schleifkammer (12) mit einer Vorderwand (61), einer Rückwand (62), zwei Seitenwänden (63) mit abgedichteten Durchführungen für die Brillenglashaltewelle (6, 7) und die Schleifspindel (18), einer Oberwand (64) mit einem Klappdeckel (14), einem Boden (65) mit dem Kühlflüssigkeitsabfluß (13) und einem Kühlflüssigkeitszulauf (66) im oberen Bereich der Rückenwand (62) zum flächigen, nach Art eines Wasservorhangs Benetzen der Rückwand (62) wenigstens im Bereich der Breite der Schleifscheibe (2).

19. Brillenglasrandschleifmaschine nach Anspruch 18, **gekennzeichnet durch** eine verschließbare Öffnung (72) zum Auswechseln der Schleifscheibe (2) in der Seitenwand (63), die der Seitenwand mit der Durchführung für die Schleifspindel (1) gegenüberliegt, mit einem den Durchmesser der Schleifscheibe (2) übersteigenden Durchmesser.

20. Brillenglasrandschleifmaschine nach einem der Ansprüche 1 bis 19 **gekennzeichnet durch** eine Feinschleifscheibe (68) mit einer Facettennut (69), die so angeordnet ist, daß die Achse (45) der Brillenglashaltewelle (6, 7) beim Schleifen der Dachfacette eines Brillenglases (8) in einer Mittellage im wesentlichen parallel zur Achse (44) der Schleifscheibe (2) liegt und **durch** beiderseits der Feinschleifscheibe (68) angeordnete Vorschleifscheiben (70, 71), wovon die eine zum Vorschleifen von Silikatgläsern und die andere zum Vorschleifen von Kunststoffgläsern bestimmt ist.

## Claims

1. Polishing machine for spectacle lenses having
- a guide column (26), disposed on a lower machine part (1) and which may be tilted about a horizontal axis (52) in the region of the lower machine part (1),
- a support pillar (27), movable up and down in the guide column (26) and guided so as to be rotatable,
- an upper machine part (3), secured to the support pillar (27),
- a lens-holding shaft (6, 7) disposed with its drive (23, 24) in the upper machine part (3),
- a polishing disc packet (2) disposed with its drive on the lower machine part (1) and
- a switching contact (58, 59) disposed in the region of the upper end of the guide column (26) and which opens or closes when a spectacle lens (9), clamped in the lens-holding shaft (6, 7), lies on one of the polishing discs (68, 70, 71) of the polishing disc packet (2) with a pressure which can be preset.

2. Polishing machine for spectacle lenses according to claim 1, **characterised in that** a bearing (51) forming the horizontal pivoting axis *(52)* is disposed at a spacing from the vertical axis (17) of the guide column (22) and parallel to the polishing disc axis (44) on a console (53) on the lower end of the guide column (22), and diametrically opposite a further console (54) is disposed on the guide column (22) which co-operates via a resiliently elastic supporting element (55, 57) with the lower machine part (1).

3. Polishing machine for spectacle lenses according to claim 2, **characterised in that** an adjusting screw (55), which is supported by a spring (57) on the lower machine part (1), can be screwed into the console (54).

4. Polishing machine for spectacle lenses according to one of claims 1 to 3, **characterised in that** at the upper end of the guide column there is disposed a radially protruding, adjustable switching tappet (58) which co-operates with a switch (59), disposed radially in relation to same and preferably designed as a proximity switch.

5. Polishing machine for spectacle lenses with CNC control according to one of claims 1 to 4, having
- a lens-holding shaft (6, 7) disposed with its drive (23, 24) on an upper machine part (3) which can be moved up and down on the guide column (26) and pivoted about the axis (17) of the guide column (26), and a polishing disc (2) disposed with its drive on the lower machine part (1),
- a support pillar (27) for the upper machine part (3), which pillar is guided moveable up and down in the guide column (26) and rotatable,
- a CNC-controlled drive (30, 31, 32, 35, 36, 37, 38) to adjust the height of the support pillar (27) and engaging coaxially in the guide column (26) on the support pillar (27),
- a position encoder (46, 48, 50), operatively connected to the support pillar (27) and the guide column (26), for controlling a height-adjustment motor (37) according to a spectacle lens shape which can be preset and
- a drive (40, 41, 42, 43) to move a spectacle lens blank (9) to and fro in a uniform manner on a rough grinding wheel (70, 71), to transfer the shaped spectacle lens into a bevel groove (69) of a smoothing and polishing disc (68) and to grind a top bevel on the circumference of the shaped spectacle lens in accordance with a predetermined course through controlled pivoting of the support pillar (27) and thus of the lens-holding shaft (6, 7) about the axis (17) of the guide column (26).

6. Polishing machine for spectacle lenses with CNC control according to one of claims 1 to 4, having
- a polishing disc disposed with its drive (22) on an arm which can moved up and down on the guide column (26) and pivoted about the axis (17) of the guide column (26),
- a lens-holding shaft (6, 7) disposed with its drive (23, 24) on a fixed upper machine part (3),
- a support pillar (27) for the arm, said pillar being guided moveable up and down in the guide column (26) and rotatable,
- a CNC-controlled drive (30, 31, 32, 35, 36, 37, 38), engaging coaxially in the guide column (26) on the support pillar (27), to adjust the height of the support pillar (27),
- a position encoder (46, 48, 50), operatively connected to the support pillar (27) and the guide column (26), for controlling a height-adjustment motor (37) according to a spectacle lens shape which can be preset and
- a drive (40, 41, 42, 43) to move a rough grinding wheel (70, 71) to and fro in a uniform manner, to transfer the shaped spectacle lens into a bevel groove of a smoothing and polishing disc (68) and to grind a top bevel on the circumference of the shaped spectacle lens in accordance with a predetermined course through controlled pivoting of the support pillar (27) and thus of the polishing disc (2) about the axis (17) of the guide column (26).

7. Polishing machine for spectacle lenses according to claim 5 or 6, **characterised by** a spherical liner (28) in the guide column (26) to so guide the support pillar (27) that it is movable up and down and pivotable with little play and friction.

8. Polishing machine for spectacle lenses according to claim 5, 6 or 7, **characterised by** a threaded spindle (32), guided in the guide column (26) in radial and axial rolling-contact bearings (33, 34), engaging on the support pillar (27) via a threaded bush (30) which is disposed in the guide column (26) to rotate in unison with same but axially displaceable, said spindle being capable of being set in rotation by a servomotor (37).

9. Polishing machine for spectacle lenses according to claim 8, **characterised by** a rolling-contact thrust bearing (29) between the threaded bush (30) and the support pillar (27).

10. Polishing machine for spectacle lenses according to one of claims 5 to 9, **characterised in that** the drive for pivoting the support pillar (27) comprises a servomotor (40), disposed in the upper machine part (3) and driving a threaded spindle (41) in rotation, as well as a threaded nut (42) co-operating with the threaded spindle (41), and the threaded nut (42) is guided vertically displaceable relative to the guide column (26) by a guide bar (43) disposed on the guide column (26).

11. Polishing machine for spectacle lenses according to one of claims 5 to 10, **characterised by** a position encoder (46, 48, 50) operatively connected to the threaded bush (30) and the guide column (26) to control the servomotor (37) according to a spectacle lens shape which can be preset.

12. Polishing machine for spectacle lenses according to claim 11, **characterised in that** the threaded bush (30) is secured against twisting by a radial pin (31) guided into an axial slot (47), which pin serves as a carrier for an encoder (46), and a toothed rack (48), disposed on the guide column (26), co-operates with a toothed wheel (50) on the encoder (46) to receive the path of the threaded bush (30).

13. Polishing machine for spectacle lenses according to one of claims 1 to 12, having
- a polishing disc (2), disposed with its drive (22) on a lower machine part (1) which bears a guide column (26),
- a lens-holding shaft (6, 7), disposed with its drive (3, 24) on an upper machine part (3) and thus pivotable in a straight line up and down as well as about an axis (17) of the guide column, said axis being at a spacing from the axis of rotation (44, 45) of the polishing disc and the lens-holding shaft and perpendicular to same,
- a polishing chamber (12), disposed on the upper machine part (3), enclosing the polishing disc (2) and the lens-holding shaft (6, 7) and sealed against liquid coolant squirting from the polishing disc (2), and having a coolant outlet (13) guided towards the lower machine part (1), and
- a movable seal (21) between the polishing chamber (12) and a polishing spindle (18).

14. Polishing machine for spectacle lenses according to one of claims 1 to 12, having
- a polishing disc (2), disposed with its drive (22) on an arm which is movable up and down on a vertical support (26) and about the axis (17) of the guide column (26),
- a lens-holding shaft (6, 7), disposed with its drive (23, 24) above the polishing disc (2) on an upper machine part and supported on an upper region of a lower machine part,
- a polishing chamber (12), secured to the upper machine part, enclosing the polishing disc (2) and the lens-holding shaft (6, 7), sealed against liquid coolant squirting from the polishing disc (2) and disposed on the upper region of the lower machine part (1), which region supports the lens-holding shaft (6, 7), said chamber having a coolant outlet (13) guided towards the lower region of the lower machine part, and
- a movable seal (21) between the polishing chamber (12) and a polishing spindle (18).

15. Polishing machine for spectacle lenses according to claim 13 or 14 **characterised in that** the seal between the polishing spindle (18) and the polishing chamber (12) comprises a bellows (21).

16. Polishing machine for spectacle lenses according to claim 13 or 14, **characterised by** a seal formed by a bellows (39) between the polishing chamber (12) and the lower machine part (1).

17. Polishing machine for spectacle lenses according to claim 13, 14 or 15, **characterised in that** that the tubular coolant outlet (13) protrudes into a funnel-shaped collecting trough (67) on the lower machine part (1) and the coolant flows from the collecting trough (67) into a collecting receptacle.

18. Polishing machine for spectacle lenses according to one of claims 13 to 17, **characterised by** a substantially parallelepipedic polishing chamber (12) having a front wall (61), a rear wall (62), two side walls (63) with sealed lead-throughs for the lens-holding shaft (6, 7) and the polishing spindle (18), having an upper wall (64) with a hinged lid (14), a base (65) with a coolant outlet (13) and a coolant inlet (66) in the upper region of the rear wall (62) for wetting in a planar manner, like a water curtain, the rear wall (62) at least in the region of the width of the polishing disc (2).

19. Polishing machine for spectacle lenses according to claim 18, **characterised by** a lockable aperture (72) for exchanging the polishing disc (2) in the side wall (63) which lies opposite the side wall having the lead-through for the polishing spindle (1), said aperture having a diameter exceeding the diameter of the polishing disc (2).

20. Polishing machine for spectacle lenses according to one of claims 1 to 19, **characterised by** a smoothing and polishing disc (68) with a bevel groove (69) which is so arranged that the axis (45) of the lens-holding shaft (6, 7) lies, during the grinding of the top bevel of a spectacle lens (8), in a central position substantially parallel to the axis (44) of the polishing disc (2), and by rough grinding wheels (70, 71) disposed on both sides of the smoothing and polishing disc (68), one of which is intended to rough grind silicate glass lenses and the other to rough grind plastics material lenses.

## Revendications

1. Polisseuse pour bordure de verre de lunettes avec
- une colonne de guidage (26) disposée dans une partie inférieure de la polisseuse (1) et inclinable autour d'un axe horizontal (52) dans la zone de la partie inférieure de la polisseuse (1),
- une potence (27) montante, descendante et guidée de manière rotative dans la colonne de guidage (26),
- une partie supérieure de la polisseuse (3) fixée à la potence (27),
- un arbre de maintien du verre de lunettes (6, 7) avec son entraînement (23, 24) disposé dans la partie supérieure de la polisseuse (3),
- un jeu de meules (2) disposé sur la partie inférieure de la polisseuse (1) avec son entraînement (22) et
- un contact (58, 59) disposé dans la zone de l'extrémité supérieure de la colonne de guidage (26) s'ouvrant ou se fermant lorsqu'un verre de lunettes (9) serré dans l'arbre de maintien du verre de lunettes (6, 7) repose avec une pression prédéterminable sur une des meules (68, 70, 71) du jeu de meules (2).

2. Polisseuse pour bordure de verre de lunettes selon la revendication 1, **caractérisée en ce qu'**un palier (51) formant l'axe de pivotement horizontal (52) distant de l'axe vertical (17) de la colonne de guidage (26) et parallèle à l'axe des meules (44) disposé sur une console (53) à l'extrémité inférieure de la colonne de guidage (26) et diamétralement opposé à une autre console (54) de la colonne de guidage (26) qui agit conjointement avec la partie inférieure de la polisseuse (1) par le biais d'un support élastique antivibratoire (55, 57).

3. Polisseuse pour bordure de verre de lunettes selon la revendication 2, **caractérisée en ce qu'**une vis de réglage (55) qui s'appuie par un ressort (57) sur la partie inférieure de la polisseuse (1) peut être vissée dans la console (54).

4. Polisseuse pour bordure de verre de lunettes selon l'une quelconque des revendications 1 à 3, **caractérisée en ce qu'**un coulisseau réglable (58), distant radialement est disposé à l'extrémité supérieure de la colonne de guidage et agit conjointement avec un contact (59) disposé radialement et se comportant de préférence comme détecteur de proximité.

5. Polisseuse pour bordure de verre de lunettes avec commande numérique CNC selon l'une quelconque des revendications 1 à 4 avec
- un arbre de maintien du verre de lunettes (6, 7) avec son entraînement (23, 24), disposé dans une partie supérieure de la polisseuse (3) montante et descendante le long de la colonne de guidage (26) et pivotante autour de l'axe (17) de la colonne de guidage (26), et une meule (2) avec son entraînement disposée dans la partie inférieure de la polisseuse (1)
- une potence (27) montante et descendante ainsi que guidée de manière rotative dans la colonne de guidage (26), destinée à la partie supérieure de la polisseuse (3)
- un entraînement (30, 31, 32, 35, 36, 37, 38) commandé par la CNC pour le déplacement vertical de la potence (27) venant en prise coaxialement à la potence (27) dans la colonne de guidage (26)
- un capteur de déplacement (46, 48, 50) en liaison active avec la potence (27) et la colonne de guidage (26) pour commander un moteur de déplacement vertical (37) conformément à une forme prédéterminable d'un verre de lunettes et
- un entraînement (40, 41, 42, 43) pour déplacer régulièrement d'avant en arrière un verre de lunettes brut (9) sur une meule d'ébauche (70, 71), pour déplacer le verre de lunettes poli en forme dans une gorge pour facettes (69) d'une meule fine (68) et pour polir une facette en forme de toit sur le pourtour du verre de lunettes formé à la polisseuse conformément à un tracé prédéterminé par pivotement commandé de la potence (27) et donc aussi de l'arbre de maintien du verre de lunette (6, 7) autour de l'axe (17) de la colonne de guidage (26).

6. Polisseuse pour bordure de verre de lunettes avec commande CNC selon l'une quelconque des revendications 1 à 4 avec
- une meule (2) avec son entraînement (22), disposée sur un bras montant et descendant le long de la colonne de guidage (26) et pivotant autour de l'axe (17) de la colonne de guidage (26),
- un arbre de maintien du verre de lunettes (6, 7) avec son entraînement (23, 24) disposé sur une partie supérieure fixe de la polisseuse (3),
- une potence (27) pour le bras, montante et descendante ainsi que guidée de manière rotative dans la colonne de guidage (26),
- un entraînement (30, 31, 32, 35, 36, 37, 38) piloté par commande CNC pour le déplacement vertical de la potence (27) ayant prise coaxialement à la potence (27) dans la colonne de guidage (26),
- un capteur de déplacement (46, 48, 50) en liaison active avec la potence (27) et la colonne de guidage (26) pour commander un moteur de déplacement vertical (37) conformément à une forme prédéterminable d'un verre de lunettes et
- un entraînement (40, 41, 42, 43) pour déplacer régulièrement d'avant en arrière une meule d'ébauche (70, 71), pour déplacer le verre de lunettes poli en forme dans une gorge pour facette (69) d'une meule fine (68) et pour polir une facette en forme de toit sur le pourtour du verre de lunettes formé à la polisseuse conformément à un tracé prédéterminé par pivotement commandé de la potence (27) et donc de la meule (2) autour de l'axe (17) de la colonne de guidage (26).

7. Polisseuse pour bordure de verre de lunettes selon la revendication 5 ou 6, **caractérisée par** une douille à billes (28) dans la colonne de guidage (26) pour un guidage sans jeu ni frottements en montée, en descente et en pivotement de la potence (27).

8. Polisseuse pour bordure de verre de lunettes selon la revendication 5, 6 ou 7, **caractérisée par** une broche filetée (32) guidée dans la colonne de guidage (26) dans des paliers à roulement axiaux et radiaux (33, 34), en prise avec la potence (27) par le biais d'une douille taraudée (30) disposée dans la colonne de guidage (26) ne pouvant pas tourner mais décalable axialement, pouvant être tournée par un moteur de positionnement (37).

9. Polisseuse pour bordure de verre de lunettes selon la revendication 8, **caractérisée par** un palier à roulement axial (29) entre la douille taraudée (30) et la potence (27).

10. Polisseuse pour bordure de verre de lunettes selon l'une quelconque des revendications 5 à 9, **caractérisée en ce que** l'entraînement pour faire pivoter la potence (27) se compose d'un moteur de positionnement (40) disposé dans la partie supérieure de la polisseuse (3) et entraînant de manière rotative une broche filetée (41) ainsi que d'un écrou fileté (42) agissant conjointement avec la broche filetée (41) et **en ce que** l'écrou fileté (42) déplaçable verticalement par rapport à la colonne de guidage (26) est guidé par une tige de guidage (43) disposée sur la colonne de guidage (26).

11. Polisseuse pour bordure de verre de lunettes selon l'une quelconque des revendications 5 à 10, **caractérisée par** un capteur de déplacement (46, 48, 50) en liaison active avec la douille taraudée (30) et la colonne de guidage (26) pour commander le moteur de positionnement (37) conformément à une forme prédéterminable d'un verre de lunettes.

12. Polisseuse pour bordure de verre de lunettes selon la revendication 11, **caractérisée en ce que** la douille taraudée (30) ne peut pas tourner grâce à une broche radiale (31) qui est fixée dans une rainure axiale (47) et qui sert de support pour un encodeur (46), et **en ce qu'**une crémaillère (48) disposée sur la colonne de guidage (26) avec un pignon (50) sur l'encodeur (46) coopère pour l'enregistrement du déplacement de la douille taraudée (30).

13. Polisseuse pour bordure de verre de lunettes selon l'une quelconque des revendications 1 à 12 avec
- une meule (2) avec son entraînement (22) disposée sur une partie inférieure de la polisseuse (1) portant la colonne de guidage (26),
- un arbre de maintien de verre de lunettes (6, 7) avec son entraînement (23, 24) disposé sur une partie supérieure de la polisseuse (3) et donc déplaçable de haut en bas ainsi que pivotable autour d'un axe (17) de la colonne de guidage (26) distant des axes de rotation de la meule et de l'arbre de maintien du verre de lunettes (44, 45) et vertical à ceux-ci,
- une chambre de polissage (12) disposée dans la partie supérieure de la polisseuse (3), enfermant la meule (2) et l'arbre de maintien du verre de lunettes (6, 7), étanche au liquide de refroidissement projeté par la meule (2) et pourvue d'un écoulement (13) pour le liquide de refroidissement menant à la partie inférieure de la polisseuse (1) et
- une garniture d'étanchéité mobile (21) entre la chambre de polissage (12) et une broche porte-meule (18).

14. Polisseuse pour bordure de verre de lunettes selon l'une quelconque des revendications 1 à 12 avec
- une meule (2) avec son entraînement (22) disposée sur un bras déplaçable verticalement sur une colonne verticale (26) et pivotable autour de l'axe (17) de la colonne de guidage (26),
- un arbre de maintien du verre de lunettes (6, 7) avec son entraînement (23, 24) disposé sur une partie supérieure de la polisseuse au-dessus de la meule (2), s'appuyant contre une zone supérieure d'une partie inférieure de la polisseuse,
- une chambre de polissage (12) fixée à la partie supérieure de la polisseuse, enfermant la meule (2) et l'arbre de maintien du verre de lunettes (6, 7), étanche au liquide de refroidissement projeté par la meule (2), disposée dans la zone supérieure de la partie inférieure de la polisseuse supportant l'arbre de maintien du verre de lunettes (6, 7), pourvue d'un écoulement (13) pour le liquide de refroidissement menant à la zone inférieure de la partie inférieure de la polisseuse (1) et
- une garniture d'étanchéité mobile (21) entre la chambre de polissage (12) et une broche porte-meule (18).

15. Polisseuse pour bordure de verre de lunettes selon la revendication 13 ou 14, **caractérisée en ce que** l'étanchéification entre la broche porte-meule (18) et la chambre de polissage (12) se compose d'un soufflet (21).

16. Polisseuse pour bordure de verre de lunettes selon la revendication 13 ou 14, **caractérisée par** une étanchéification entre la chambre de polissage (12) et la partie inférieure de la polisseuse (1) sous forme d'un soufflet (39).

17. Polisseuse pour bordure de verre de lunettes selon la revendication 13, 14 ou 15, **caractérisée en ce que** l'écoulement du liquide de refroidissement (13) en forme de tuyau débouche dans une cuvette collectrice (67) en forme d'entonnoir située dans la partie inférieure de la polisseuse (1) et que le liquide de refroidissement s'écoule de la cuvette collectrice (67) dans un récipient collecteur.

18. Polisseuse pour bordure de verre de lunettes selon l'une quelconque des revendications 13 à 17, **caractérisée par** une chambre de polissage (12), sensiblement parallélépipédique, avec une paroi avant (61), une paroi arrière (62), deux parois latérales (63) avec passages étanches pour l'arbre de maintien du verre de lunettes (6, 7) et la broche porte-meule (18), une paroi supérieure (64) avec un couvercle rabattant (14), un fond (65) avec l'écoulement pour le liquide de refroidissement (13) et une arrivée de liquide de refroidissement (66) dans la zone supérieure de la paroi arrière (62) pour mouiller superficiellement, comme avec un rideau d'eau, la paroi arrière (62) au moins dans la zone correspondant à la largeur de la meule (2).

19. Polisseuse pour bordure de verre de lunettes selon la revendication 18, **caractérisée par** une ouverture (72) verrouillable pour changer la meule (2) dans la paroi latérale (63) qui est située en face de la paroi latérale avec le passage pour la broche porte-meule (1), avec un diamètre dépassant le diamètre de la meule (2).

20. Polisseuse pour bordure de verre de lunettes selon l'une quelconque des revendications 1 à 19, **caractérisée par** une meule fine (68) avec une rainure pour facette (69) qui est disposée de manière à ce que l'axe (45) de l'arbre de maintien du verre de lunettes (6, 7) soit sensiblement parallèle à l'axe (44) de la meule (2) lors du polissage de la facette en forme de toit d'un verre de lunettes (8) en une position centrale, et **caractérisée par** les meules d'ébauche (70, 71) disposées de chaque côté de la meule fine (68) dont l'une est destinée au prépolissage des verres en silicate et l'autre au prépolissage des verres en matière plastique.
